# EUROPEAN PATENT SPECIFICATION

(11) **EP 3 318 815 B1**
(45) Date of publication and mention of the grant of the patent: **15.04.2020**
(21) Application number: 15897186.1
(22) Date of filing: 02.07.2015
(51) Int. Cl.: F16L 53/00, H01R 4/64, F24S 10/70, F24S 50/00

(54) **SOLAR THERMAL COLLECTOR GROUNDING STRUCTURE AND SOLAR THERMAL COLLECTOR**
SOLARTHERMISCHE KOLLEKTORERDUNGSSTRUKTUR UND SOLARTHERMISCHER KOLLEKTOR
STRUCTURE DE MISE À LA TERRE POUR DISPOSITIF DE CAPTATION DE CHALEUR SOLAIRE ET DISPOSITIF DE CAPTATION DE CHALEUR SOLAIRE

(43) Date of publication of application: 09.05.2018
(73) Proprietor: Chiyoda Corporation, Kanagawa 220-8765 (JP)
(72) Inventor: KANEMITSU, Masaya, Yokohama-shi Kanagawa 220-8765 (JP); SHIRAI, Jotaro, Yokohama-shi Kanagawa 220-8765 (JP); KAIDA, Ryuichi, Yokohama-shi Kanagawa 220-8765 (JP); SUZUKI, Yasushi, Yokohama-shi Kanagawa 220-8765 (JP); NISHIJIMA, Yasuyuki, Yokohama-shi Kanagawa 220-8765 (JP)
(74) Representative: Schröer, Gernot H.
(86) International application number: PCT/JP2015/069147
(87) International publication number: WO 2017/002259

(56) References cited:
- CN-U- 203 731 722
- JP-A- 2014 102 013
- JP-A- 2014 159 892
- JP-A- 2014 523 997
- JP-A- 2014 531 552
- JP-B2- S5 939 661
- US-A1- 2010 175 689
- US-A1- 2011 291 405
- US-A1- 2013 037 072

## Description

The present invention relates to a ground structure of a solar heat collecting device, a solar heat collecting device, and a solar heat power generation system.

Solar heat power generation systems that perform power generation by condensing sunlight on a heat transfer fluid flow path using a reflector to heat a heat transfer fluid flowing in the heat transfer fluid flow path and rotating a steam turbine generator using the heated heat transfer fluid have been known. The solar heat power generation systems can generate power for 24 hours by heat storage with less expensive installation cost than a sunlight power generation system. Conventionally, a solar thermal power generation system using oil as a heat transfer fluid has been proposed (see, for example, patent document 1).

[patent document 1] JP 2014-102013 A [patent document 2] CN 203 731 722 U
Patent document 2 discloses a ground structure of a solar heat collecting device according to the preamble of claim 1.

In recent years, molten salt has attracted attention as a heat transfer fluid used for the solar heat power generation system. Since the molten salt has a high boiling point, operation temperature can be made relatively high with the molten salt, and generation efficiency is improved by generating high-temperature steam.

Since the molten salt solidifies at about 250°C, heat is deprived by the heat transfer fluid flow path so that the molten salt may solidify in a state where temperature of the heat transfer fluid flow path is relatively low when the molten salt is poured into the heat transfer fluid flow path at the time of start-up or after maintenance. Thus, it is necessary to warm the heat transfer fluid flow path to predetermined temperature or higher before pouring the molten salt into the heat transfer fluid flow path.

It is conceivable to cause a current to flow to the heat transfer fluid flow path as one technique of heating the heat transfer fluid flow path. When the current flows, the heat transfer fluid flow path is warmed by Joule heat at that time. When the current flows to the heat transfer fluid flow path, however, it is necessary to ground a plurality of steel supports that supports the heat transfer fluid flow path for the sake of safety.

The present invention has been made in view of such circumstances, and an object thereof is to provide a technique capable of securing electrical safety while reducing the time and effort required for construction for grounding a support that supports a heat transfer fluid flow path.

In order to solve the above-described problem, a ground structure of a solar heat collecting device according to an aspect of the present invention is a ground structure of a solar heat collecting device including: a first heat transfer fluid flow path through which a heat transfer fluid receiving solar heat flows; and a plurality of first supports formed using a first conductive material that supports the first heat transfer fluid flow path. The first heat transfer fluid flow path is warmed by being energized. Some of first supports among the plurality of first supports are grounded via a cable, which is connected to the some of the plurality of first supports via a dissimilar material joining member and formed using a second conductive material. All other first supports among the plurality of first supports are connected to the ground via a connection member formed using the first conductive material. The second conductive material has higher conductivity than the first conductive material.

According to this aspect, some of the supports are grounded via the cable. Therefore, the connection via the dissimilar material joining member is reduced as compared with the case where all the supports are grounded via the cable. In addition, when insulation failure occurs in the heat transfer fluid flow path in a large-scale structure with a large number of supports such as the solar heat collecting device even if a ground standard of the solar heat collecting device as a whole is satisfied by grounding some of the supports via the cable, the other supports are connected to the ground via the connection member when there is a risk that electricity may be accumulated in the support. That is, it is possible to secure the electrical safety while reducing the cable to the minimum and suppressing the time and effort required for joining using the dissimilar metal joining member according to this aspect.

Another aspect of this disclosure is also a ground structure of a solar heat collecting device. This ground structure of a solar heat collecting device is a ground structure of a solar heat collecting device including: a first heat transfer fluid flow path through which a heat transfer fluid receiving solar heat flows; and a plurality of first supports which is made of steel and supports the first heat transfer fluid flow path. The first heat transfer fluid flow path is warmed by being energized. Some of the first supports among the plurality of first supports are grounded via a cable made of copper. At least some other first supports among the plurality of first supports are connected to the ground via a connection member made of steel.

At least some other first supports may be connected to the some of the first supports via the connection member.

A second heat transfer fluid flow path through which a heat transfer fluid receiving solar heat flows and a plurality of second supports that supports the second heat transfer fluid flow path may be further provided. The plurality of second supports may be grounded via the cable that grounds the some of the first supports that supports the first heat transfer fluid flow path.

A solar heat collecting device according to this disclosure includes any one of the above-described ground structures.

Incidentally, arbitrary combinations of the above components and those obtained by converting the expressions of the present invention among devices, methods, systems, and the like are also effective as aspects of the present invention.

According to the present invention, it is possible to secure the electrical safety while reducing the time and effort required for construction for grounding the support that supports the heat transfer fluid flow path.

Fig. 1 is a schematic diagram illustrating a solar heat power generation system according to an embodiment.
Fig. 2 is a schematic diagram illustrating a solar heat collecting device of Fig. 1.
Fig. 3 is a schematic diagram illustrating a part of a first heat-collector.

Hereinafter, the same or equivalent constituent elements and members illustrated in the respective drawings will be denoted by the same reference numerals, and a redundant description thereof will be omitted as appropriate. In addition, dimensions of the members in the respective drawings are illustrated in an appropriately enlarged and reduced manner in order to facilitate understanding. In addition, some of the members which are not important for describing the embodiment are not displayed in the respective drawings.

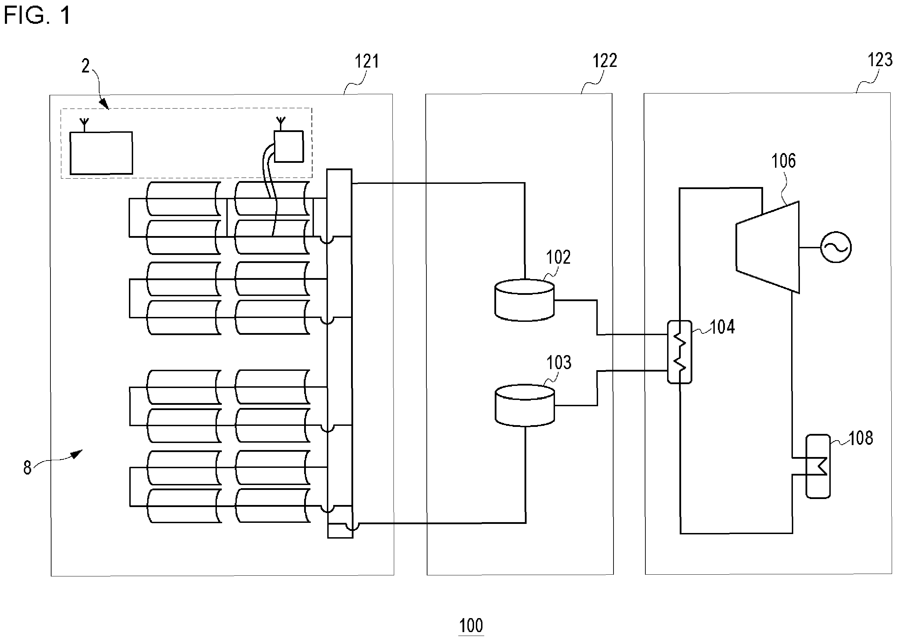

Fig. 1 is a schematic diagram illustrating a solar heat power generation system 100 according to an embodiment. The solar heat power generation system 100 includes three areas of a light condensing area 121, a heat storage area 122, and a power generation area 123.

The light condensing area 121 mainly includes a solar heat collecting device 8 and a heating system 2. The solar heat collecting device 8 collects sunlight and heats a heat transfer fluid flowing in a heat transfer fluid flow path (to be described later). The heated heat transfer fluid is sent to the heat storage area 122. The heating system 2 heats the heat transfer fluid flow path so as to prevent molten salt from solidifying by depriving heat from the heat transfer fluid flow path before pouring the molten salt into the heat transfer fluid flow path.

The heat storage area 122 includes a hot tank 102 and a cold tank 103. As the heat of the heated heat transfer fluid is stored in the hot tank 102, it is possible to generate power when necessary. For example, it is possible to generate power at night or in the bad weather in daytime.

The power generation area 123 includes a steam generator 104, a steam turbine generator 106, and a condenser 108. The steam generator 104 generates steam using the heated heat transfer fluid stored in the hot tank 102, and the steam turbine generator 106 rotates a turbine by the steam. Power is generated by this rotation. A relatively low-temperature heat transfer fluid whose heat is deprived by the steam generator 104 is sent to the cold tank 103. The condenser 108 returns the steam to a liquid.

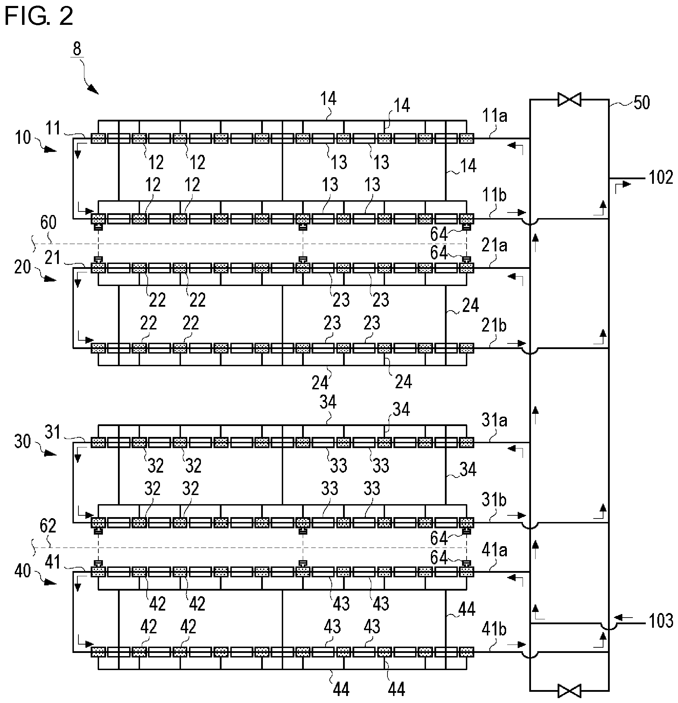

Fig. 2 is a schematic diagram illustrating the solar heat collecting device 8. The solar heat collecting device 8 includes a first light collector 10, a second light collector 20, a third light collector 30, a fourth light collector 40, a connection pipeline 50, a first cable 60, and a second cable 62.

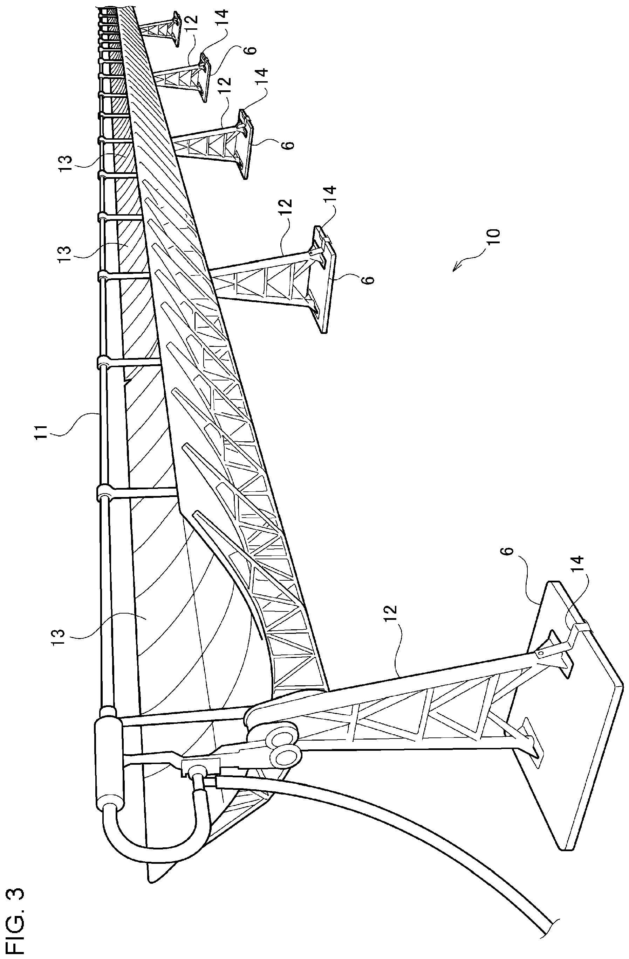

The first light collector 10 includes a first heat transfer fluid flow path 11, a plurality of first supports 12, a plurality of first reflectors 13, and a first connection member 14. Fig. 3 is a schematic diagram illustrating a part of the first heat collector 10. Each of the plurality of first supports 12 is formed using steel and erected on a cradle 6 made of concrete. The first support 12 is disposed along the first heat transfer fluid flow path 11 and supports the first heat transfer fluid flow path 11. In addition, the first support 12 rotatably supports the first reflector 13.

The first reflector 13 collects the sunlight on the first heat transfer fluid flow path 11 to heat the heat transfer fluid flowing inside the first heat transfer fluid flow path 11. A rotating device (not illustrated) is connected to the first reflector 13. The rotating device rotates the first reflector 13 according to, for example, a position of the sun. As a result, the heat transfer fluid is efficiently heated.

The first heat transfer fluid flow path 11 is made of metal, and the molten salt as the heat transfer fluid receiving solar heat flows therein. The molten salt has a boiling point higher than that of synthetic oil, conventionally used in solar heat collecting devices, and thus, can be warmed to higher temperature. As a result, the power generation efficiency by the steam turbine generator 106 is improved. On the other hand, the molten salt solidifies at about 250°C. The molten salt basically does not solidify since being warmed by the solar heat at the time of collecting the light, but may solidify as the heat thereof is deprived by the first heat transfer fluid flow path 11 when temperature of the first heat transfer fluid flow path 11 is in a relatively low state before pouring the molten salt into the first heat transfer fluid flow path 11, for example, at the time of start-up or after maintenance. Thus, it is necessary to warm the first heat transfer fluid flow path 11 to predetermined temperature (for example, 280°C) or higher before pouring the molten salt into the first heat transfer fluid flow path 11.

It is conceivable to warm the first heat transfer fluid flow path 11 by laying a heating wire in the first heat transfer fluid flow path 11 and causing a current to flow therethrough as a technique of warming the first heat transfer fluid flow path 11. However, the first heat transfer fluid flow path 11 is covered with a vacuum glass tube for heat insulation, and thus, it is difficult to lay the heating wire. Thus, one or a plurality of power sources (not illustrated) included in the heating system 2 are connected to the first heat transfer fluid flow path 11 to cause a current to flow directly to the first heat transfer fluid flow path 11, and the first heat transfer fluid flow path 11 is warmed by Joule heat at that time in the present embodiment. Thus, the first heat transfer fluid flow path 11 is insulated such that the current for warming the first heat transfer fluid flow path 11 does not flow to the first support 12 that supports the first heat transfer fluid flow path 11. In addition, the first support 12 is grounded as described below in preparation for insulation failure of the first heat transfer fluid flow path 11 and the like.

Returning to Fig. 2, the first heat transfer fluid flow path 11 is formed in a U shape and includes a long straight line 11a and a long straight line 11b extending in substantially the same direction. The first support 12 and the first reflector 13 are disposed along these long straight line 11a and long straight line 11b. As an example, each of the long straight line 11a and the long straight line 11b has a length of 500 to 600 m and is supported by the ten first supports 12 in the illustrated example.

The plurality of first supports 12 supporting the long straight line 11a of the first heat transfer fluid flow path 11 is electrically connected to each other by the first connection members 14 made of steel. Similarly, the plurality of first supports 12 supporting the long straight line 11b of the first heat transfer fluid flow path 11 is electrically connected to each other by the first connection members 14. Some of the first connection member 14 are buried in the ground. That is, the first connection member 14 is connected to the ground. Thus, each of the first supports 12 is connected to the ground via the first connection member 14. As will be described later, only the first supports 12 which are not connected to the first cable 60 may be connected to the ground via the first connection member 14 while some of the plurality of first supports 12 are connected to the first cable 60.

In addition, the first supports 12 supporting the long straight line 11a of the first heat transfer fluid flow path 11 and the first supports 12 supporting the long straight line 11b of the first heat transfer fluid flow path 11 are also connected to each other by the first connection members 14. In the present embodiment, the first supports 12 supporting the long straight line 11a and the first supports 12 supporting the long straight line 11b are connected to each other at a plurality of places (three places in Fig. 2) by the first connection member 14. The first connection member 14 is subjected to surface treatment such as galvanizing in order to prevent rusting or ignition caused by light collection.

The second light collector 20 includes a second heat transfer fluid flow path 21, a plurality of second supports 22, a plurality of second reflectors 23, and a second connection member 24.

The third light collector 30 includes a third heat transfer fluid flow path 31, a plurality of third supports 32, a plurality of third reflectors 33, and a third connection member 34.

The fourth light collector 40 includes a fourth heat transfer fluid flow path 41, a plurality of fourth supports 42, a plurality of fourth reflectors 43, and a fourth connection member 44.

Each of the second heat transfer fluid flow path 21, the third heat transfer fluid flow path 31, and the fourth heat transfer fluid flow path 41 is configured in the same manner as the first heat transfer fluid flow path 11. The second heat transfer fluid flow path 21 is disposed such that a long straight line 21a thereof is adjacent to the long straight line 11b of the first heat transfer fluid flow path 11 and extends in substantially the same direction. The fourth heat transfer fluid flow path 41 is disposed such that a long straight line 41a thereof is adjacent to a long straight line 31b of the third heat transfer fluid flow path 31 and extends in substantially the same direction.

Each of the second support 22, the third support 32, and the fourth support 42 is configured in the same manner as the first support 12.

Each of the second reflector 23, the third reflector 33, and the fourth reflector 43 is configured in the same manner as the first reflector 13.

Each of the second connection member 24, the third connection member 34, and the fourth connection member 44 is configured in the same manner as the first connection member 14.

The connection pipeline 50 is an annular flow path and is connected to the first heat transfer fluid flow path 11, the second heat transfer fluid flow path 21, the third heat transfer fluid flow path 31, and the fourth heat transfer fluid flow path 41. In addition, the connection pipeline 50 is also connected to the hot tank 102 and the cold tank 103 of the heat storage area 122. Therefore, the first heat transfer fluid flow path 11, the second heat transfer fluid flow path 21, the third heat transfer fluid flow path 31, the fourth heat transfer fluid flow path 41, the hot tank 102, and the cold tank 103 are connected via the connection pipeline 50. The heat transfer fluid heated in each heat transfer fluid flow path is sent to the hot tank 102 via the connection pipeline 50. In addition, the relatively low-temperature heat transfer fluid stored in the cold tank 103 is sent to each heat transfer fluid flow path via the connection pipeline 50.

The first cable 60 is provided between the first light collector 10 and the second light collector 20. The first cable 60 is a copper cable for grounding, and one end of the first cable 60 is connected to a main earth grid which is an earth grid of the entire solar heat power generation system 100. Some (three in Fig. 2) of the first supports 12 among the plurality of first supports 12 supporting the first heat transfer fluid flow path 11 are grounded by the first cable 60. That is, some of the first supports 12 are grounded by a cable having a relatively high conductivity (in particular, higher than that of the first connection member 14). In addition, the first supports 12 to which the first cable 60 is not connected are also electrically connected to the first cable 60 via the first connection members 14 and the other first supports 12 since the respective first supports 12 are electrically connected to each other by the first connection members 14 as described above. Since the first heat transfer fluid flow path 11 is formed in the U shape, and the first supports 12 supporting the long straight line 11a and the first supports 12 supporting the long straight line 11b are connected at the plurality of places by the first connection members 14 in the present embodiment, each of the first supports 12 is electrically connected to the first cable 60 through a plurality of paths.

Since the first cable 60 is made of copper and the first support 12 is made of steel, the first cable 60 and the first support 12 are joined by a dissimilar metal joining member 64. As a result, it is possible to prevent corrosion caused by contact between copper and steel (that is, contact between dissimilar metals). A ratio of the number of the first supports 12 connected to the first cable 60 relative to the total number of the first supports 12 is desirably 1/10 to 3/10. If the ratio is lower than this, the number of paths that electrically connects the respective first supports 12 and the first cable 60 is reduced, and thus, there is a risk that the electrical safety of the solar heat collecting device 8 as a whole may fall below the standard. In addition, if the ratio is higher than this, material cost of the dissimilar metal joining member 64 and the time and effort for construction increase, which is uneconomical.

In addition, some (the three second supports 22 in Fig. 2) of the second supports 22 among the plurality of second supports 22 that supports the second heat transfer fluid flow path 21 are grounded by the first cable 60. That is, the first light collector 10 and the second light collector 20 are grounded by the common first cable 60 provided therebetween.

The second cable 62 is provided between the third light collector 30 and the fourth light collector 40. The second cable 62 is a copper cable for grounding and is connected to the main earth grid, which is similar to the first cable 60. Some (three in Fig. 2) of the third supports 32 among the plurality of third supports 32 and some (three in Fig. 2) of the fourth supports 42 among the plurality of fourth supports 42 are grounded by the second cable 62. That is, the third light collector 30 and the fourth light collector 40 are grounded by the common second cable 62 provided therebetween.

Some supports of each of the light collectors are connected to the copper cable by a dissimilar metal joining member 64 according to the solar heat collecting device 8 according to the above-described embodiment. Here, since each of the light collectors has a lot of supports, it takes time and effort to complete the construction and the material cost of the dissimilar metal joining member 64 increases if all these supports are connected to the copper cable by the dissimilar metal joining member 64. In regard to this, only some (for example, 1/10 to 3/10 out of the plurality of supports) of the supports are connected to the copper cable by the dissimilar metal joining member 64 as described above according to the solar heat collecting device 8 according to the embodiment, and thus, it is possible to suppress the time and effort for construction and the material cost of the dissimilar metal joining member 64 as compared with the case where all the supports are connected to the cable via the dissimilar metal joining member 64.

In addition, the respective supports of the respective light collector are connected to the ground (that is, grounded) by the connection member made of steel according to the solar heat collecting device 8 according to the present embodiment. In addition, there is a risk that electricity may be accumulated in the support when insulation failure occurs in the heat transfer fluid flow path in a large-scale structure with a large number of supports such as the solar heat collecting device 8 of the embodiment even if a ground standard of the solar heat collecting device 8 as a whole is satisfied by grounding some of the first supports 12 via the cable. In regard to this, since the respective supports are also grounded by the connection members as described above according to the solar heat collecting device 8 of the embodiment, the electricity is not accumulated in the support even if the insulation failure occurs in the heat transfer fluid flow path. That is, it is possible to secure the electrical safety while reducing the cable to the minimum and suppressing the time and effort required for joining using the dissimilar metal joining member 64 according to the solar heat collecting device 8.

In addition, there is a case where light is unintentionally collected in the cable so that temperature of the cable increases depending on an angle of the reflector. The cable is made of copper and deforms and corrodes at relatively low temperature. In regard to this, it is possible to reduce the copper cable while securing the electrical safety using the connection member made of steel that is unlikely to cause such problems, in the present embodiment. Thus, a maintenance frequency of the copper cable is reduced, and maintenance cost is reduced.

According to the solar heat collecting device 8 of the present embodiment, each of the supports is electrically connected to the copper cable through the plurality of paths by the connection members. Thus, the electrical safety is maintained even when some of the path are broken due to breakage of the connection member.

According to the solar heat collecting device 8 of the present embodiment, the first light collector 10 and the second light collector 20 are grounded by the common copper cable provided therebetween. Therefore, the material cost is reduced since the number of cables is reduced as compared with the case of being grounded by different cables.

As above, the present invention has been described based on the embodiment. This embodiment is illustrative, and it is understood by those skilled in the art that various types of modification examples can be made in combinations of the respective components and the respective processes, and further, such modification examples are included in a range of the invention.

### (Modification 1)

Although the case where the solar heat collecting device 8 includes the four light collectors has been described in the embodiment, the present invention is not limited thereto. The solar heat collecting device 8 may include one, two, three, or five or more light collectors.

### (Modification 2)

Although the case where all the supports are connected to each other via the connection member in each light collector has been described in the embodiment, the present invention is not limited thereto. Each support may be connected to a cable directly or via another support and a connection member, and it is unnecessary for all the supports in each light collector to be connected to each other by the connection member.

### (Modification 3)

Although the description has been given in the embodiment regarding the case where each of the supports is grounded by the cable directly or via another support and the connection member and grounded (connected to the ground) by the connection member, the present invention is not limited thereto. There may be a support that is grounded by a cable but is not grounded by a connection member, and there may be a support that is grounded by the connection member but is not grounded by the cable. In addition, there may be a support that is not grounded by either the cable or the connection member.

### (Modification 4)

Although the case where the support and the connection member are made of steel and the first cable 60 and the second cable 62 are made of copper has been described in the embodiment, the present invention is not limited thereto. A support may be formed using another conductive material that requires a dissimilar material joining member for connection with the first cable 60 and the second cable 62. A connection member may be formed using the same conductive material as the support. In addition, the first cable 60 and the second cable 62 may be formed using a conductive material which requires a dissimilar material joining member for connection with the support and has higher conductivity than the support.

### (Modification 5)

Although the case where the single grounding cable is provided for the two light collectors has been described in the embodiment, the present invention is not limited thereto. One grounding cable may be provided for one light collector, or one grounding cable may be provided for three or more light collectors.

## Claims

1. A ground structure of a solar heat collecting device (8) comprising:
a first heat transfer fluid flow path (11) through which a heat transfer fluid receiving solar heat flows; and
a plurality of first supports (12) formed using a first conductive material that supports the first heat transfer fluid flow path (11),
wherein the first heat transfer fluid flow path (11) is warmed by being energized, **characterized in that**:
some of the first supports (12) among the plurality of first supports (12) are grounded via a cable (60), which is connected to the some first supports (12) via a dissimilar material joining member (64) and formed using a second conductive material,
all other first supports (12) among the plurality of first supports (12) are grounded via a connection member (14) formed using the first conductive material, and
the second conductive material has higher conductivity than the first conductive material.

2. The ground structure of a solar heat collecting device (8) according to claim 1,
wherein the plurality of first supports (12) is made of steel, and
wherein the cable (60) is made of copper, and
wherein the connection member (14) is made of steel.

3. The ground structure of a solar heat collecting device (8) according to claim 1 or 2, wherein
all other first supports (12) are connected to the some first supports (12) via the connection member (14).

4. The ground structure of a solar heat collecting device (8) according to any one of claims 1 to 3, further comprising:
a second heat transfer fluid flow path (21) through which a heat transfer fluid receiving solar heat flows; and
a plurality of second supports (22) that supports the second heat transfer fluid flow path (21),
wherein the plurality of second supports (22) is grounded via the cable (60) grounding the some first supports (12) that support the first heat transfer fluid flow path (11).

5. A solar heat collecting device (8) comprising the ground structure of a solar heat collecting device (8) according to any one of claims 1 to 4.

## Patentansprüche

1. Erdungsstruktur einer solaren Wärmesammelvorrichtung (8), umfassend:
einen ersten Wärmeübertragungsfluidströmungspfad (11), durch den ein Wärmeübertragungsfluid fließt, das Solarwärme aufnimmt; und
eine Vielzahl von ersten Trägern (12), die unter Verwendung eines ersten leitenden Materials gebildet ist, das den ersten Wärmeübertragungsfluidströmungspfad (11) trägt,
wobei der erste Wärmeübertragungsfluidströmungspfad (11) durch Energieaufnahme erwärmt wird, **dadurch gekennzeichnet, dass**:
einige der ersten Träger (12) unter der Vielzahl von ersten Trägern (12) über ein Kabel (60) geerdet sind, das mit einigen der ersten Träger (12) über ein Verbindungselement aus einem unterschiedlichen Material (64) verbunden ist und unter Verwendung eines zweiten leitenden Materials gebildet ist,
alle anderen ersten Träger (12) unter der Vielzahl von ersten Trägern (12) über ein Verbindungselement (14) geerdet sind, das unter Verwendung des ersten leitenden Materials gebildet ist, und
das zweite leitende Material eine höhere Leitfähigkeit als das erste leitende Material aufweist.

2. Erdungsstruktur einer solaren Wärmesammelvorrichtung (8) nach Anspruch 1, wobei die Vielzahl der ersten Träger (12) aus Stahl gefertigt ist und
wobei das Kabel (60) aus Kupfer gefertigt ist und
wobei das Verbindungselement (14) aus Stahl gefertigt ist.

3. Erdungsstruktur einer solaren Wärmesammelvorrichtung (8) nach Anspruch 1 oder 2, wobei
alle anderen ersten Träger (12) über das Verbindungselement (14) mit den einigen ersten Trägern (12) verbunden sind.

4. Erdungsstruktur einer solaren Wärmesammelvorrichtung (8) nach einem der Ansprüche 1 bis 3, ferner umfassend:
einen zweiten Wärmeübertragungsfluidströmungspfad (21), durch den ein Wärmeübertragungsfluid fließt, das Solarwärme aufnimmt; und
eine Vielzahl von zweiten Trägern (22), die den zweiten Wärmeübertragungsfluidströmungspfad (21) trägt,
wobei die Vielzahl von zweiten Trägern (22) über das Kabel (60) geerdet ist, das die einigen ersten Träger (12) erdet, die den ersten Wärmeübertragungsfluidströmungspfad (11) tragen.

5. Solare Wärmesammelvorrichtung (8), die die Erdungsstruktur einer solaren Wärmesammelvorrichtung (8) nach einem der Ansprüche 1 bis 4 umfasst.

## Revendications

1. Structure de mise à la terre d'un dispositif de captation de chaleur solaire (8) comprenant:
un premier chemin d'écoulement de fluide de transfert de chaleur (11) à travers lequel un fluide de transfert de chaleur reçoit un écoulement de chaleur solaire; et
une pluralité de premiers supports (12) formée à l'aide d'un premier matériau conducteur qui supporte le premier chemin d'écoulement de fluide de transfert de chaleur (11),
dans lequel le premier chemin d'écoulement de fluide de transfert de chaleur (11) est chauffé en étant stimulé, **caractérisée en ce que**:
certains des premiers supports (12) parmi la pluralité de premiers supports (12) sont mis à la terre par l'intermédiaire d'un câble (60), lequel est raccordé aux quelques premiers supports (12) par l'intermédiaire d'un élément de liaison de matériau différent (64) et formé à l'aide d'un second matériau conducteur,
tous les autres supports (12) parmi la pluralité de premiers supports (12) sont mis à la terre par l'intermédiaire d'un élément de liaison (14) formé à l'aide du premier matériau conducteur, et
le second matériau conducteur a une conductivité supérieure à celle du premier matériau conducteur.

2. Structure de mise à la terre d'un dispositif de captation de chaleur solaire (8) selon la revendication 1,
dans laquelle la pluralité de premiers supports (12) est faite d'acier, et
dans laquelle le câble (60) est fait de cuivre, et
dans laquelle l'élément de liaison (14) est fait d'acier.

3. Structure de mise à la terre d'un dispositif de captation de chaleur solaire (8) selon la revendication 1 ou 2, dans laquelle tous les autres premiers supports (12) sont reliés aux quelques premiers supports (12) par l'intermédiaire de l'élément de liaison (14).

4. Structure de mise à la terre d'un dispositif de captation de chaleur solaire (8) selon l'une quelconque des revendications 1 à 3, comprenant en outre:
un second chemin d'écoulement de fluide de transfert de chaleur (21) à travers lequel un fluide de transfert de chaleur recevant la chaleur solaire s'écoule; et
une pluralité de seconds supports (22) qui supporte le second chemin d'écoulement de fluide de transfert de chaleur (21),
dans laquelle la pluralité de seconds supports (22) est mise à la terre par l'intermédiaire du câble (60) en mettant à la terre les quelques premiers supports (12) qui supportent le premier chemin d'écoulement de fluide de transfert de chaleur (11).

5. Dispositif de captation de chaleur solaire (8) comprenant la structure de mise à la terre d'un dispositif de captation de chaleur solaire (8) selon l'une quelconque des revendications 1 à 4.
